# EUROPÄISCHE PATENTSCHRIFT

(11) **EP 0 800 912 B1**
(45) Veröffentlichungstag und Bekanntmachung des Hinweises auf die Patenterteilung: **27.12.2000**
(21) Anmeldenummer: 97104028.2
(22) Anmeldetag: 11.03.1997
(51) Int. Cl.: B29C 65/08

(54) **Vorrichtung zum Verbinden der Enden von Bändern**
Apparatus for joining tape ends
Dispositif pour relier les extrémités de rubans

(30) Priorität: 13.04.1996 DE 29606754 U
(43) Veröffentlichungstag der Anmeldung: 15.10.1997
(73) Patentinhaber: MASCHINENBAU GEROLD GMBH + CO. KG, D-41334 Nettetal (DE)
(72) Erfinder: Wehr, Hubert, 53332 Bornheim-Brenig (DE)
(74) Vertreter: Gille Hrabal Struck Neidlein Prop Roos

(56) Entgegenhaltungen:
- DE-A- 3 911 634
- US-A- 4 624 809
- US-A- 4 743 412

## Beschreibung

Die Erfindung betrifft eine Vorrichtung zum Verbinden der Enden von beim Abbinden von Gütern verwendeten Bändern, beispielsweise von thermoplastisches Material aufweisenden Bändern, mit einer als Auflage für die aufeinanderliegenden Enden der Bänder dienenden entfernbaren Hinterlege-Platte und mit einem über der Hinterlege-Platte bewegbaren und gegen die auf der Hinterlege-Platte liegenden Enden der Bänder anstellbaren Kopf. Eine Vorrichtung dieser Art ist z.B. aus der DE-A-3 911 634 bekannt.

Zum Abbinden von Gütern aller Art ist es bekannt, Bänder um die Güter zu legen und festzuziehen, damit die Bänder die Güter mit einer gewissen Vorspannung umschlingen, ohne jedoch die Güter bzw. deren Verpackung zu beschädigen. Dabei werden die Enden jedes Bandes, insbesondere wenn die Bänder aus thermoplastischem Material bestehen oder zumindest thermoplastisches Material aufweisen, beispielsweise aus Polypropylen oder anderem thermoplastischen Kunststoff, durch Wärmeeinwirkung miteinander verbunden, d. h. sozusagen miteinander verschweißt.

Es ist bekannt, die aufeinanderliegenden Enden der Bänder durch hochfrequente Schwingungen zu erwärmen und dabei aufeinander zu drücken, so daß die aufeinanderliegenden Enden der Bänder miteinander verschweißt werden. Hierfür benötigt man als Unterlage eine Platte, auf welcher die miteinander zu verschweißenden Enden der Bänder liegen, und einen gegen diese Platte bzw. die auf ihr liegenden Bänder anstellbaren Kopf, der hochfrequente Schwingbewegungen von beispielsweise 20 000 Hertz ausführt, welche ausreichen, um die von diesem schwingenden Kopf berührten Bandenden so stark zu erwärmen, daß ihr Material zumindest teigig wird, um eine Verschweißung der Bandenden herbeizuführen. Dabei wird das Band aber auch an Stellen erhitzt, an denen keine Verschweißung stattfindet.

Da die Verschweißung der Bandenden nach dem Abbinden der Transportgüter auf der Ware ausgeführt werden muß, ist die als Unterlage vorgesehene, während des Schweißvorganges nicht bewegte Platte zwischen dem betreffenden Band und der Ware angebracht und muß nach dem Verschweißen herausgezogen werden. Die Bänder müssen daher mit einer gewissen Vorspannung um die Ware bzw. das abzubindende Gut gelegt werden, weil die als Unterlage dienende Platte Raum beansprucht und nach dem Herausziehen sich daher die Bandspannung lockert. Dies ist insbesondere bei kleineren Gebinden problematisch, weil man die Vorspannung der Bänder nicht beliebig einstellen kann, denn sonst könnten die Bänder die verpackte Ware bzw. deren Verpackung beschädigen. Besonders bei kleineren Gebinden ergibt sich deshalb das Problem, daß nach dem Herausziehen der Unterlegplatte das betreffende Band nicht mehr ausreichend fest, sondern nur noch locker das verpackte Gut umschlingt.

Die Dicke der Unterlegplatte kann nicht beliebig klein gewählt werden, weil sie zum Erfüllen ihrer Funktion eine gewisse Steifigkeit aufweisen muß.

Der Erfindung liegt die Aufgabe zugrunde, die Enden von zum Abbinden von Gütern verwendeten Bändern derart miteinander verbinden und insbesondere miteinander verschweißen zu können, daß durch das Entfernen der hierbei benutzten Unterlegplatte die Bandspannung nicht spürbar absinkt und gleichwohl eine feste und dauerhafte Verbindung der aufeinanderliegenden Bandenden erzielt wird.

Diese Aufgabe wird erfindungsgemäß mit einer Vorrichtung gelöst, welche die Merkmale des Anspruches 1 aufweist. Vorteilhafte Ausgestaltungen und Weiterbildungen der erfindungsgemäßen Vorrichtung sind Gegenstand der Unteransprüche.

Mit der erfindungsgemäßen Vorrichtung ist es möglich, die an der Schweißstelle zu hinterlegende Platte im unmittelbaren Schweißbereich extrem dünn zu gestalten, nämlich dadurch, daß die Platte zweigeteilt ist und der die Schweißwärme erzeugende Kopf beispielsweise zylindrisch ausgebildet ist und in drehende Schwingungen versetzt werden kann. Die zweigeteilte Platte ist dabei so ausgebildet, daß sie eine Ausnehmung enthält, in welche der Kopf eingefahren bzw. eingerückt werden kann. Die Platte ist auf diese Weise im eigentlichen Schweißbereich dünn zu halten, während bei Verwendung eines zylindrischen Schweiß-Kopfes ihre Dicke von der Teilungsebene oder Teilungslinie ausgehend zunimmt, so daß eine unerwünschte Verbiegung der Platte unter dem auf sie beim Schweißvorgang ausgeübten Druck nicht eintreten kann.

Die miteinander zu verschweißenden Bandenden nehmen bei Verwendung eines zylindrischen Schweißkopfes eine leicht gewölbte Form entsprechend der Krümmung der Oberfläche des Schweiß-Kopfes an, was aber unbedeutend ist. Entscheidend ist, daß die Platte bzw. deren beiden Teile im Schweißbereich sehr dünn gehalten werden kann bzw. können, so daß die im verschweißten Band erzeugte Spannung kaum abfällt, wenn man die Platte bzw. deren beiden Teile aus dem Bereich der Schweißstelle herauszieht.

Die erfindungsgemäße Vorrichtung ist besonders für das Abbinden kleinerer Packungen oder Gebinde geeignet, bei denen schon ein kleinerer Spannungsabfall im verschweißten Band nach dem Entfernen der Schweißvorrichtung ungünstige Folgen haben kann.

In der Zeichnung sind zur weiteren Erläuterung der Erfindung Ausführungsbeispiele der erfindungsgemäßen Schweiß-Vorrichtung schematisch dargestellt, und zwar zeigt
- Fig. 1: eine Stirnansicht der Vorrichtung mit auseinandergefahrenen Platten-Teilen,
- Fig. 2: einen horizontalen Schnitt durch die Vorrichtung aus Fig. 1 in der Ruhestellung mit auseinandergefahrenen Platten-Teilen und zurückgezogenem Schweiß-Kopf.
- Fig. 3: eine Teildraufsicht auf die beiden Teile der Platte gemäß Fig. 1 und 2 in der Betriebsposition, wobei sich auch der drehbar gelagerte, zylinderförmige Kopf in der Betriebsposition befindet und zwischen den Teilen der geschlossenen Hinterlege-Platte und dem zylinderförmigen Kopf Enden eines Bandes zu erkennen sind,
- Fig. 4: einen im Maßstab vergrößerten Teilausschnitt aus Fig. 3, woraus die aufgerauhten Oberflächen der Teile der Hinterlege-Platte und des zylinderförmigen Kopfes zu erkennen sind,
- Fig. 5: eine Draufsicht ähnlich wie in Fig. 3 einer weiteren Ausführungsform, bei der die Enden des Bandes mittels einer in einem der beiden Teile der Hinterlege-Platte gelagerten aus- und einfahrbaren Heizzunge erwärmt werden, bevor sie mittels eines Druckstempels aufeinandergedrückt werden,
- Fig. 6: eine Draufsicht der Vorrichtung aus Fig. 5, wobei die beiden Teile der Hinterlege-Platte auseinandergefahren sind und die aufeinandergeschweißten Enden des Bandes freigegeben haben,
- Fig. 7: eine Draufsicht noch einer anderen Ausführungsform der erfindungsgemäßen Vorrichtung ähnlich wie in Fig. 3 und 5, bei der die aufeinanderliegenden Enden mittels eines auf sie drückenden und seitlich hin- und hergehenden Druckstempels aufeinander gerieben und dadurch erwärmt und schließlich miteinander verschweißt werden, und
- Fig. 8: einen im Maßstab vergrößerten Teilausschnitt der Vorrichtung aus Fig. 7.

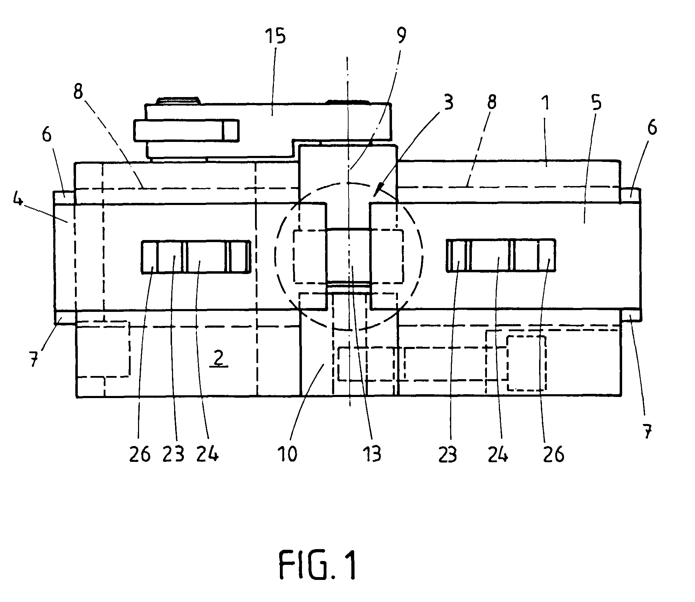

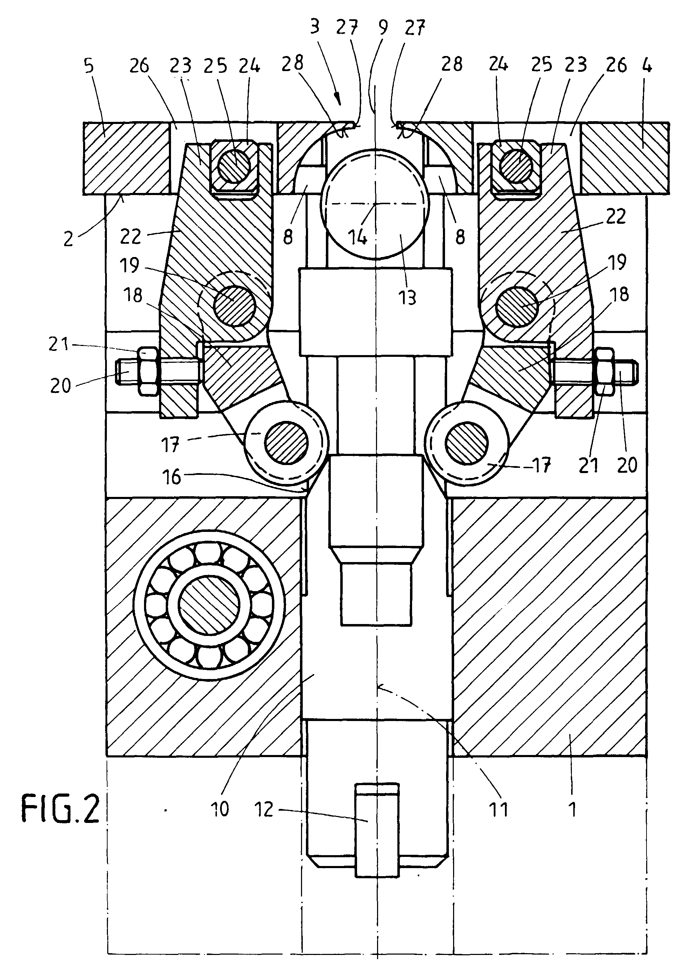

Gemäß Fig. 1 und 2 ist ein Gehäuseblock 1 an einem Stirnende 2 mit einer Hinterlege-Platte 3 versehen, die aus zwei schieberförmigen Teilen 4 und 5 besteht, welche mit Stegen 6 und 7 in einer durchgehenden, hinterschnittenen Führung 8 relativ zueinander verschiebbar gelagert sind, so daß sie aus der in der Zeichnung gezeigten zurückgefahrenen Position in die Teilungsebene 9 der Platte 3 vorgefahren werden können, damit sich die zweiteilige Hinterlege-Platte 3 in der geschlossenen Betriebsposition befindet.

Innerhalb des Gehäuseblockes 1 ist ein Arm 10 entlang einer Längsachse 11, welche in der Teilungsebene 9 der Hinterlege-Platte 3 liegt, relativ zur Hinterlege-Platte 3 verschiebbar geführt. An das aus dem Gehäuseblock 1 herausragende hintere Ende des schieberartigen oder stößelartigen Armes 10 ist zum Zwecke der Verstellung oder Verschiebung des Armes ein Hebel 12 angelenkt, der von einem nicht dargestellten Antrieb verstellt werden kann.

Am dem Hebel 12 entgegengesetzten Ende des Armes 10 ist ein zylinderförmiger Kopf 13 gelagert, der um seine Mittelachse 14, welche ebenfalls in der Teilungsebene 9 der Hinterlege-Platte 3 liegt, drehbar ist. Über einen nur schematisch angedeuteten Antrieb 15 kann der Kopf 13 in Dreh-Schwingungsbewegungen geringer Amplitude versetzt werden, wobei Schwingungsfrequenzen von etwa 200 bis 300 Hertz vorgesehen sind.

Um den zylinderförmigen Kopf 13 in die Betriebsposition zu bringen, wird der Arm 10 entlang seiner Längsachse 11 durch Bewegung des Hebels 12 aus seiner in Fig. 2 gezeigten zurückgezogenen Position in die Betriebsposition gegen die Innenseite der zweigeteilten Hinterlege-Platte 3 vorgefahren. Der Arm 10 ist mit einem keil- oder kegelförmigem Abschnitt 16 versehen, an dem Rollen 17 von zwei Stellhebeln 18 anliegen, die innerhalb des Gehäuseblockes 1 jeweils um eine feststehende Achse 19 verschwenkbar gelagert sind.

Jeder Stellhebel 18 wirkt über eine Justierschraube 20 mit aufgeschraubter Kontermutter 21 mit einem weiteren Hebel 22 zusammen. Jeder dieser weiteren Hebel 22 ist jeweils um eine der beiden Achsen 19 verschwenkbar gelagert. Am äußeren Ende ist jeder Hebel 22 mit einem Maul 23 versehen, welches eine eckige Buchse 24 erfaßt, die auf einer Achse 25 verdrehbar gelagert ist. Diese Achse 25 ist in einem Langloch 26 befestigt, das in jeweils einem der beiden Teile 4 und 5 der Hinterlege-Platte 3 vorgesehen ist.

Wenn der Kopf 13 entlang der Längsachse 11 in die Betriebsstellung vorgeschoben wird, drückt der keil- oder kegelförmige Abschnitt 16 die an ihm anliegenden Rollen 17 der Stellhebel 18 auseinander, wodurch die Stellhebel 18 um die ihnen jeweils zugeordnete Achse 19 verschwenkt werden. Diese Schwenkbewegung wird auf die Hebel 22 übertragen, welche dadurch die Teile 4 und 5 der Hinterlege-Platte 3 aufeinander zu schieben. Mittels der Justierschrauben 20 sind die Hebel 22 so eingestellt, daß die Teile 4 und 5 der Hinterlege-Platte 3 mit ihrer jeweiligen Vorderkante 27 aneinanderliegen, wenn sich der zylinderförmige Kopf 13 in seiner vorgefahrenen Betriebsposition befindet.

Die Teile 4 und 5 der Hinterlege-Platte 3 sind jeweils mit einer bogenförmigen Ausnehmung 28 versehen, welche der Krümmung der Oberfläche des zylinderförmigen Kopfes 13 entspricht, so daß der Kopf 13 in der Betriebsposition innerhalb der Ausnehmungen 28 liegt und zwischen der Oberfläche des Kopfes 13 und den Oberflächen der Ausnehmungen 28 nur ein geringer Spalt verbleibt, der etwa der Dicke der zwischengelegten, übereinanderliegenden Enden eines hier nicht dargestellten Bandes entspricht. Der Kopf 13 wird dann in bogenförmige Schwingbewegungen geringer Amplitude versetzt, um die notwendige Wärme in den aufeinanderliegenden Enden des thermoplastischen Bandes zu erzeugen und dadurch mittels des Anlagedruckes des Schweiß-Kopfes 13 die Verschweißung dieser Enden herbeizuführen.

Nach Beendigung eines Schweißvorganges wird der Kopf 13 zurückgezogen. Mittels nicht dargestellter Rückholfedern werden die Hebel 22 in die in Fig. 2 gezeigte Ausgangsposition zurückgeschwenkt, so daß die Teile 4 und 5 der Hinterlege-Platte 3 wieder in die Ausgangsstellung auseinanderfahren.

Sobald ein neues Band um ein Gebinde gelegt und festgezogen wurde, wird der Arm 10 wieder vorgefahren und die Vorrichtung damit für eine neue Verschweißung geschlossen.

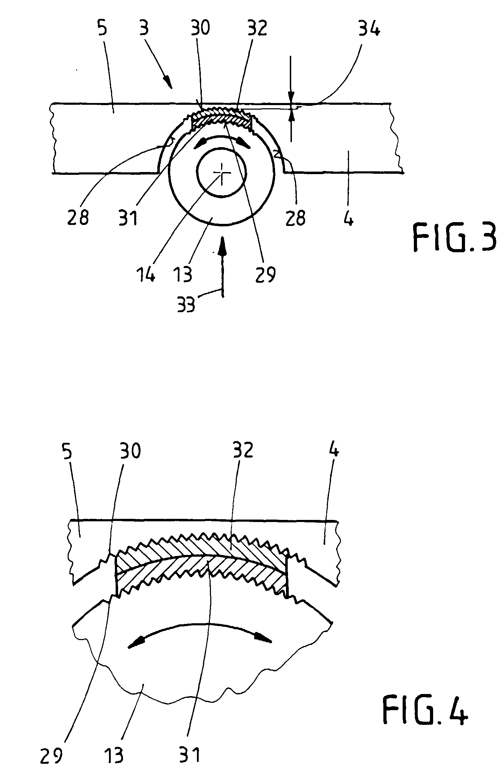

Aus Fig. 3 und 4 ist erkennbar, daß die Oberflächen des zylinderförmigen Kopfes 13 und der bogenförmigen Ausnehmungen 28 jeweils mit einer Aufrauhung 29 bzw. 30 oder einer Riffelung versehen sind, so daß die zwischen dem Kopf 13 und den Teilen 4 und 5 der Hinterlege-Platte 3 befindlichen Enden 31 und 32 eines Bandes jeweils im Reibungsschluß an der Oberfläche des Kopfes 13 bzw. der Ausnehmungen 28 gehalten werden, um bei den Schwingbewegungen des Kopfes 13 eine Relativbewegung zwischen den Enden 31 und 32 zur Erwärmung dieser Enden kurzfristig zu erzeugen und die erwärmten Bandenden unter einem mittels eines Pfeiles 33 angedeuteten Druck zusammenzuschweißen.

Bei dieser Ausführungsform ist die kleinste notwendige Dicke 34 der beiden Teile 4 und 5 der Hinterlege-Platte 3 besonders klein, so daß sich die Bandspannung nach dem Freigeben der aufeinandergeschweißten Enden 31 und 32 des Bandes nur geringfügig verringert.

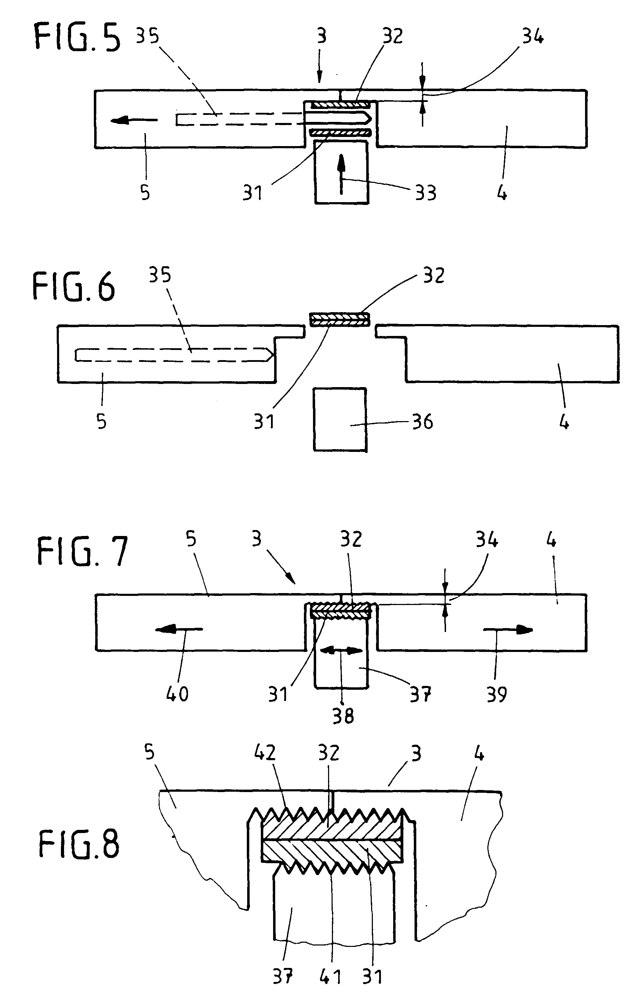

Bei der Ausführungsform der Vorrichtung gemäß Fig. 5 und 6 werden die Enden 31 und 32 des Bandes nicht durch relative Reibbewegungen für den Schweißvorgang erhitzt, sondern mittels einer Heizzunge 35, die in dem einen Teil 5 der Hinterlege-Platte 3 verschiebbar gelagert ist, um sie zwischen die Band-Enden 31 und 32 einschieben zu können. Nachdem die Band-Enden 31 und 32 ausreichend erwärmt sind, wird die Heizzunge 35 zurückgezogen, woraufhin ein Druckstempel 36 die erwärmten Band-Enden 31 und 32 aufeinanderdrückt, um die gewünschte Verschweißung herbeizuführen. Sodann können die verschweißten Band-Enden 31 und 32 nach Zurückziehen der Teile 4 und 5 der Hinterlege-Platte 3 freigegeben werden.

Fig. 6 zeigt, daß die verschweißten Band-Enden 31 und 32 nach dem Auseinanderfahren der Teile 4 und 5 der Hinterlege-Platte 3 nur eine kleine Strecke versetzt werden, so daß die Bandspannung auch nur wenig nachläßt, obwohl die Mindest-Dicke 34 der Teile 4 und 5 der Hinterlege-Platte 3 bei dieser Ausführungsform größer als bei der Ausführungsform gemäß Fig. 3 und 4 ist.

Bei der Ausführungsform gemäß Fig. 7 und 8 wird die zum Verschweißen der Band-Enden 31 und 32 erforderliche Wärme durch einen Druckstempel 37 erzeugt, der in horizontaler Richtung gemäß einem Doppelpfeil 38 in der durch Pfeile 39 und 40 angedeuteten Bewegungsrichtung der Teile 4 und 5 der Hinterlege-Platte 3 schwingend bewegt werden kann. Auch bei dieser Ausführungsform ist der Druckstempel 37 mit einer Aufrauhung 41 versehen, ebenso wie die Teile 4 und 5 und die Hinterlege-Platte 3 dem Druckstempel gegenüberliegend eine Aufrauhung 42 aufweisen, um zwar eine Reibungskontaktbewegung zwischen den beiden Band-Enden 31 und 32 erzielen zu können, jedoch zu verhindern, daß diese Enden sich relativ zu ihrer Auflage bzw. Unterlage bei der Reibungskontaktbewegung verschieben.

Auch bei dieser Ausführungsform ist die geringste Dicke 34 der Teile 4 und 5 der Unterlege-Platte 3 größer als bei der Ausführungsform gemäß Fig. 3 und 4, jedoch ist sie gleichwohl sehr gering, wie Fig. 6 in Verbindung mit der Ausführungsform gemäß Fig. 5 und 6 zeigt.

Bei den Ausführungsformen gemäß Fig. 1 bis 4 sowie 7 und 8 ist die Frequenz der Relativbewegungen zwischen den miteinander zu verschweißenden Band-Enden 31 und 32 im Gegensatz zu vorbekannten hochfrequenten Ultraschall-Erwärmungen relativ gering. Diese Frequenz liegt etwa im Bereich von 200 Hertz und besonders bevorzugt in einem Bereich zwischen etwa 200 und etwa 300 Hertz.

## Patentansprüche

1. Vorrichtung zum Verbinden der Enden (31, 32) von beim Abbinden von Gütern verwendeten Bändern, beispielsweise von thermoplastisches Material aufweisenden Bändern, mit einer als Auflage für die aufeinanderliegenden Enden (31, 32) der Bänder dienenden entfernbaren Hinterlege-Platte (3) und mit einem über der Hinterlege-Platte (3) bewegbaren und gegen die auf der Hinterlege-Platte (3) liegenden Enden (31, 32) der Bänder anstellbaren Kopf (13),
**dadurch gekennzeichnet,**
daß die Hinterlege-Platte (3) zweiteilig (4, 5) ausgebildet ist und der Kopf (13) ein Drehkörper, der um seine Längsachse (14) hin- und herschwingbar gelagert ist, oder ein Druckstempel (36; 37) ist.

2. Vorrichtung nach Anspruch 1, dadurch gekennzeichnet, daß die Hinterlege-Platte (3) in der Vorlaufrichtung der Bänder geteilt ist und daß ihre beiden Teile (4, 5) seitlich gegeneinander anstellbar und voneinander entfernbar gelagert sind.

3. Vorrichtung nach Anspruch 1 oder 2, dadurch gekennzeichnet, daß beide Teile (4, 5) der Hinterlege-Platte (3) synchron bewegbar gelagert sind.

4. Vorrichtung nach einem der Ansprüche 1 bis 3, dadurch gekennzeichnet, daß die Hinterlege-Platte (3) gegenüber dem Kopf (13) liegend eine bogenförmige Vertiefung (28) aufweist, in die der Kopf (13) in seiner Betriebsposition hineinragt.

5. Vorrichtung nach Anspruch 4, dadurch gekennzeichnet, daß bei geschlossener Hinterlege-Platte (3) die tiefste Stelle der Vertiefung (28) mit der Teilungsebene (9) der zweiteiligen Hinterlege-Platte (3) zusammenfällt.

6. Vorrichtung nach einem der Ansprüche 1 bis 3, dadurch gekennzeichnet, daß die Hinterlege-Platte (3) dem Druckstempel (36; 37) gegenüberliegend eine rechteckige Vertiefung enthält, in die der Druckstempel (36; 37) in seiner Betriebsposition hineinragt.

7. Vorrichtung nach Anspruch 6, dadurch gekennzeichnet, daß der Druckstempel (37) parallel zur Hinterlege-Platte (3) schwingbar gelagert ist.

8. Vorrichtung nach einem der Ansprüche 1 bis 7, dadurch gekennzeichnet, daß die Vertiefung (28) der Hinterlege-Platte (3) und der Kopf (13) bzw. der Druckstempel (37) mit aufgerauhten Anlageflächen (29, 30, 41, 42) versehen sind.

9. Vorrichtung nach einem der Ansprüche 1 bis 3, dadurch gekennzeichnet, daß in einem Teil (5) der Hinterlege-Platte (3) eine Heizzunge (35) in die Vertiefung (28) einfahrbar gelagert ist.

10. Vorrichtung nach einem der Ansprüche 1 bis 9, dadurch gekennzeichnet, daß die Anstelleinrichtung für den Kopf (13) bzw. den Druckstempel (36; 37) mit Stelleinrichtungen (17 bis 25) für die beiden Teile (4, 5) der Hinterlege-Platte (3) gekoppelt ist.

11. Vorrichtung nach Anspruch 10, dadurch gekennzeichnet, daß die Stelleinrichtungen (17 bis 25) für die beiden Teile (4, 5) der geteilten Hinterlege-Platte (3) synchron zu betätigen mit einem gemeinsamen mechanischen Antrieb (10, 12, 16) verbunden sind.

12. Vorrichtung nach Anspruch 10 oder 11, dadurch gekennzeichnet, daß die Stelleinrichtungen (17 bis 25) für die beiden Teile (4, 5) der geteilten Hinterlege-Platte (3) eine Justierung (20, 21) enthalten.

## Claims

1. Apparatus for joining the ends (31, 32) of tapes used for fastening goods, such as for instance tapes comprising a thermoplastic material, further including a removable back-up plate (3) for holding the superposed ends (31, 32) of the tapes, also comprising a head portion (13) movable over said back-up plate (3) and adjustable against the ends (31, 32) of the tapes arranged on said back-up plate (3),
**characterized in that**
said back-up plate (3) consists of two parts (4, 5) and that said head portion (13) is a rotary body reciprocating around its longitudinal axis (14), or a pressure piston (36; 37).

2. Apparatus according to claim 1,
**characterized in that**
in the forward moving direction of the tapes said back-up plate (3) is divided and that its two parts (4, 5) are laterally adjustable and removably supported.

3. Apparatus according to one of claims 1 or 2,
**characterized in that**
both parts (4, 5) of said back-up plate (3) are synchronously movable.

4. Apparatus according to one of claims 1 to 3,
**characterized in that**
opposite the head portion (13) said back-up plate (3) comprises a curved recess (28) into which extends the head portion (13) in its operating position.

5. Apparatus according to claim 4,
**characterized in that**
in the closed position of the back-up plate (3) the lowest point of recess (28) coincides with the joint face (9) of the two-part back-up plate (3).

6. Apparatus according to one of claims 1 to 3,
**characterized in that**
opposite the pressure piston (36; 37) said back-up plate (3) comprises a rectangular recess into which extends the pressure piston (36; 37) in its operating position.

7. Apparatus according to claim 6,
**characterized in that**
pressure piston (37) is swingingly supported parallel to said back-up plate (3).

8. Apparatus according to one of claims 1 to 7,
**characterized in that**
the recess (28) of the back-up plate (3) and the head portion (13) or the pressure piston (37) respectively are provided with roughened support faces (29, 30, 41, 42).

9. Apparatus according to one of claims 1 to 3,
**characterized in that**
in one portion (5) of the back-up plate (3) a heating tongue (35) is retractably supported in said recess (28).

10. Apparatus according to one of claims 1 to 9,
**characterized in that**
the pitch control of the head portion (13) or the pressure piston (36; 37) is connected to adjusting means (17 to 25) for both parts (4, 5) of the back-up plate (3).

11. Apparatus according to claim 10,
**characterized in that**
said adjusting means (17 to 25) of the two parts (4, 5) of the divided back-up plate (3) are connected to a common mechanical drive (10, 12, 16) allowing synchronous operation of these two parts.

12. Apparatus according to one of claims 10 or 11,
**characterized in that**
the regulation means (17 to 25) for both parts (4, 5) of the divided back-up plate (3) comprise an adjusting means (20, 21).

## Revendications

1. Dispositif pour relier les extrémités (31, 32) de rubans utilisés pour assembler divers articles, comme par exemple des rubans comprenant un matériau thermoplastique, ce dispositif incluant une plaque doubleur démontable (3) servant de support pour les extrémités (31, 32) superposées de ces rubans, et comprenant également une tête (13) déplaçable par rapport aux extrémités (31, 32) des rubans disposées sur cette plaque doubleur (3),
**caractérisé en ce que**
cette plaque doubleur (3) est consiste de deux parties (4, 5) et que la tête (13) est un corps rotatif oscillant autour de son axe longitudinal (14), ou bien un piston de compression (36; 37).

2. Dispositif suivant la revendication 1,
**caractérisé en ce que**
la plaque doubleur (3) est divisée dans la direction d'avance des rubans et que ses deux parties (4, 5) sont latéralement ajustables et disposées de façon écartable l'une de l'autre.

3. Dispositif suivant l'une des revendications 1 ou 2,
**caractérisé en ce que**
les deux parties (4, 5) de la plaque doubleur (3) sont déplaçables de manière synchrone.

4. Dispositif suivant l'une des revendications 1 à 3,
**caractérisé en ce que**
en regard de la tête (13) la plaque doubleur (3) comprend une gorge courbe (28) dans laquellle s'étend ladite tête (13) dans sa position opérationnelle.

5. Dispositif suivant la revendication 4,
**caractérisé en ce que**
lorsque la plaque doubleur (3) est fermée le point le plus bas de la gorge (28) coincide avec le plan de joint (9) de la plaque doubleur (3) en deux parties.

6. Dispositif suivant l'une des revendications 1 à 3,
**caractérisé en ce que**
en regard du piston de compression (36; 37) la plaque doubleur (3) comprend une gorge rectangulaire dans laquellle s'étend le piston de compression (36; 37) dans sa position opérationnelle.

7. Dispositif suivant la revendication 6,
**caractérisé en ce que**
le piston de compression (37) est logé de façon oscillante en direction parallèle de la plaque doubleur (3).

8. Dispositif suivant l'une des revendications 1 à 7,
**caractérisé en ce que**
la gorge (28) de la plaque doubleur (3) ainsi que la tête (13) ou le piston de compression (37) sont pourvus de surfaces de support rugueuses (29, 30, 41, 42).

9. Dispositif suivant l'une des revendications 1 à 3,
**caractérisé en ce que**
dans une partie (5) de la plaque doubleur (3) une langue de chauffage (35) est disposée de manière repliable dans la gorge (28).

10. Dispositif suivant l'une des revendications 1 à 9,
**caractérisé en ce que**
le dispositif de réglage de la tête (13) ou du piston de compression (36; 37) est couplé avec des dispositifs de réglage (17 à 25) pour les deux parties (4, 5) de la plaque doubleur (3).

11. Dispositif suivant la revendication 10,
**caractérisé en ce que**
les dispositifs de réglage (17 à 25) des deux parties (4, 5) de la plaque doubleur (3) divisée sont reliés à un entrainement mécanique commun (10, 12,16) permettant une opération synchrone des ces deux parties.

12. Dispositif suivant l'une des revendications 10 ou 11,
**caractérisé en ce que**
les dispositifs de réglage (17 à 25) des deux parties (4, 5) de la plaque doubleur (3) divisée comprennent un dispositif d'ajustage (20, 21).
